# EUROPÄISCHE PATENTSCHRIFT

(11) **EP 1 900 701 B1**
(45) Veröffentlichungstag und Bekanntmachung des Hinweises auf die Patenterteilung: **15.04.2009**
(21) Anmeldenummer: 08100076.2
(22) Anmeldetag: 16.09.2004
(51) Int. Cl.: C04B 7/36, F27B 7/42, F27D 19/00, B01F 15/04

(54) **Verfahren und Vorrichtung zur Herstellung eines hydraulischen Bindemittels**
Process and apparatus for the preparation of a hydraulic binder
Procédé et dispositif pour la préparation d'un liant hydraulique

(30) Priorität: 23.09.2003 DE 10344040
(43) Veröffentlichungstag der Anmeldung: 19.03.2008
(62) Teilanmeldung aus: 04765302.7
(73) Patentinhaber: Polysius AG, 59269 Beckum (DE)
(72) Erfinder: Westmattelmann, Ralf Bernhard, 59302 Oelde (DE); Enders, Michael, 48143 Münster (DE)
(74) Vertreter: Tetzner, Michael

(56) Entgegenhaltungen:
- EP-A- 0 995 726
- WO-A-02/22246
- WO-A-02/083279
- US-A- 3 233 973
- US-A- 3 602 488
- US-A- 4 395 290

## Beschreibung

Die Erfindung betrifft ein Verfahren und eine Vorrichtung zur Herstellung eines hydraulischen Bindemittels aus mehreren Rohmaterialkomponenten, wobei die Rohmaterialkomponenten zu Rohmehl vermahlen werden, das Rohmehl in einer Brennanlage zu Klinker verbrannt wird und schließlich der Klinker zusammen mit weiteren Zumahlstoffen vermahlen wird.

Bei der Herstellung von Zementklinker werden durch den Verfahrensabschnitt der Rohmaterialaufbereitung die Hauptoxide CaO, Al₂O₃, Fe₂O₃ und SiO₂ aus Materialien wie z.B. Kalkstein, Mergel, Ton, Bauxit, Eisenerz, Sand etc. derart gemischt, dass die Verhältniszahlen des CaO zu den anderen drei Oxiden, des SiO₂ zum Aluminium- und Eisenoxid sowie des Aluminiumoxid zum Eisenoxid innerhalb eines gewünschten Wertebereichs liegen. Diese drei Verhältniszahlen, auch Rohmaterialmoduln genannt, sind, neben weiteren untergeordneten Kenngrößen für die Nebenbestandteile, die wichtigsten Qualitätskenngrößen des Rohmehls, da sich hierüber die mineralogischen Hauptphasen des Zementklinkers C3S, C2S, C3A und C4AF (in Zementschreibweise) und somit die Eigenschaften des Zementklinkers einstellen lassen. Für die Eigenschaften der Klinkermineralien haben aber auch Alkalien, Sulfate, Halogene und weitere Elemente, die in geringeren Massenfraktionen enthalten sind, wesentliche Bedeutung.

Die Rohmaterialaufbereitung hat neben der notwendigen Feinmahlung für den Klinkerbrennprozess die Trocknung und Homogenität der Moduln - ausgedrückt als Standardabweichung zu den angestrebten Mittelwerten - sicherzustellen.

Der Zementklinker wird heute üblicherweise in einer Klinkerproduktionslinie bestehend aus Vorwärmer, Calcinator, Drehrohrofen und Klinkerkühler gebrannt. In der Zementmahlanlage wird der Zementklinker dann durch Zusatz eines Sulfatträgers als Erstarrungsregler und weiterer Zumahlstoffe, wie z.B. granulierter Hüttensand, Flugaschen, Puzzolane, Kalkstein und gebrannter Ölschiefer, zu unterschiedlichen Zementen mit ihren jeweiligen Eigenschaften vermahlen. Die genannten Verfahrensabschnitte Rohmaterialaufbereitung, Klinkerbrennen und Zementmahlung sind jeweils durch Lager getrennt. Diese Lager stellen einen Materialvorrat bereit, um die Verfügbarkeit eines Anlagenteils von der Betriebsbereitschaft der anderen Anlagenteile zu entkoppeln. Weiterhin werden speziell zwischen Rohmaterialaufbereitung und Klinkerbrennen die Schwankungen in den Qualitätskenngrößen durch das Silo gedämpft, um eine möglichst konstante Qualität des Rohmehls zu erzielen. Die Qualitätskenngrößen der einzelnen Verfahrensabschnitte werden durch periodische Probennahme nach den einzelnen Verfahrensabschnitten überprüft und die ermittelten Werte werden im Sinne einer Regelung zu Veränderungen an Stellgrößen materialstromaufwärts benutzt.

Diese Vorgehensweise ist mit folgenden technischen und wirtschaftlichen Nachteilen verbunden:

Die für das Endprodukt Zement wichtigsten, aber nicht alleinigen Qualitätskenngrößen, sind Druckfestigkeit als Funktion der Zeit, Erstarrungbeginn und -ende, Wasseranspruch zur Normsteife, Sulfatwiderstand usw. Durch den letzten Verfahrensabschnitt der Zementmahlung ist nur noch ein Teil dieser Kenngrößen beeinflussbar, da wesentliche Eigenschaften schon in den vorhergehenden Prozessabschnitten beeinflusst bzw. eingestellt werden. So beeinflussen die Rohmaterialmoduln das Massenverhältnis der entstehenden Klinkerphasen, die wiederum einen primären Einfluss auf die Zementeigenschaften haben. Die Vorausberechnung der Klinkerphasen, z.B. nach der Methode von Bogue, ist jedoch nur ausreichend zuverlässig, wenn die Neben- und Spurenelemente in geringen Mengen vorhanden sind. Speziell beim wirtschaftlich wichtigen Einsatz von Abfallbrennstoffen oder Abfallstoffen aus anderen Industrien - im Sinne eines Verbundprozesses - ist die Vorhersage von Klinkerphasen und damit Zementeigenschaften nicht mit ausreichender Genauigkeit möglich. Weiterhin sind die Klinkerphasen nicht homogen über die Klinkerkomgrößenverteilung verteilt. Ein weiterer Nachteil ergibt sich aus der häufig durch Verfügbarkeitsüberlegungen festgelegten Größe der Lager, die eine hohe Totzeit implizieren und somit eine geringe Flexibilität bei der Anpassung der Produktqualität an geänderte Produktionsbedingungen zur Folge haben.

Die EP-A-0 995 726 beschreibt ein Verfahren zum Herstellen eines aus einer Mehrzahl von zerkleinerten Einzelkomponenten zusammengesetzten, hydraulischen Bindemittels, wobei der Zementklinker und gegebenenfalls weitere Einzelkomponenten in einer gemeinsamen Mahleinrichtung zerkleinert und danach mit mindestens einer weiteren, getrennt davon zerkleinerten Einzelkomponente zusammengeführt wird, wobei die Zusammenführung unmittelbar nach der Zerkleinerung des Zementklinkers ohne vorherige Zwischenlagerung erfolgen soll.

Der Erfindung liegt die Aufgabe zugrunde ein Verfahren sowie eine Anlage vorzuschlagen, wodurch die aus den Lagergrößen resultierenden langen Totzeiten vermeiden werden und zusätzlich die Möglichkeit der Beeinflussung der Qualitätskenngrößen stromabwärts zur Materialflussrichtung der oben aufgeführten Verfahrensschritte besteht.

Diese Aufgabe wird erfindungsgemäß durch die Merkmale der Ansprüche 1 bzw. 7 gelöst.

Beim erfindungsgemäßen Verfahren zur Herstellung eines hydraulischen Bindemittels aus mehreren Rohmaterialkomponenten werden die Rohmaterialkomponenten zu Rohmehl vermahlen, das Rohmehl in einer Brennanlage zu Klinker verbrannt und schließlich der Klinker zusammen mit weiteren Zumahlstoffen vermahlen. Des weiteren wird der Klinker in seiner mineralogischen und/oder chemischen Zusammensetzung analysiert, wobei für den Klinker jeweils wenigstens zwei separate Klinkersilos vorgesehen sind, die mit Klinker unterschiedlicher mineralogischer und/oder chemischer Zusammensetzung befüllt werden und wobei die Zusammensetzung des zu vermahlenden Klinkers durch gesteuerten Abzug in Abhängigkeit der analysierten Zusammensetzung des Klinkers aus ein oder mehreren Klinkersilos festgelegt wird. Dadurch findet eine gezielte Regelung der Produktqualität statt.

Die erfindungsgemäße Anlage zur Herstellung eines hydraulischen Bindemittels aus mehreren Rohmaterialkomponenten besteht im Wesentlichen aus einer Mahleinrichtung zum Vermahlen der Rohmaterialkomponenten zu Rohmehl, einer Brennanlage zum Brennen des Rohmehls zu Klinker und einer Zementmahlanlage zum Mahlen des Klinkers, wobei wenigstens eine Analyseeinrichtung zur Analyse des Klinkers in seiner mineralogischen und/oder chemischen Zusammensetzung vorgesehen ist. Weiterhin weist die Anlage eine Klinkersiloanlage auf, wobei für den Klinker jeweils wenigstens zwei separate Klinkersilos vorgesehen sind. Über eine Steuereinrichtung werden die Klinkersilos in Abhängigkeit der mineralogischen und/oder chemischen Zusammensetzung des Klinkers befüllt. Ferner wird über die Steuereinrichtung die Zusammensetzung des zu vermahlenden Klinkers durch gesteuerten Abzug in Abhängigkeit der analysierten Zusammensetzung des Klinkers aus ein oder mehreren Klinkersilos festgelegt.

Weitere Ausgestaltungen der Erfindung sind Gegenstand der Unteransprüche.

Gemäß einen bevorzugten Ausführungsbeispiel wird die mineralogische und/oder chemische Zusammensetzung des Klinkers bestimmt und zur Steuerung des Abzugs des Rohmehls aus den Rohmehlsilos verwendet.

Des weiteren wird die Befüllung der Klinkersilos und der Abzug des Klinkers aus ein oder mehreren Klinkersilos in Abhängigkeit der gewünschten mineralogischen und/oder chemischen Zusammensetzung des zu schaffenden Zements geregelt.

Zur Bestimmung der mineralogischen und/oder chemischen Zusammensetzung des Klinkers können nach Korngröße und/oder Dichte fraktionierte Proben genommen und analysiert werden. Es ist auch ein Ziel der vorliegenden Erfindung, die Befüllung der Klinkersilos nach Korngröße und/oder Dichte durch Fraktionierung mittels Sieben oder Sichten durchzuführen.

Die verschiedenen Silos können gezielt für die Lagerung von Materialien mit unterschiedlichen Qualitätskenngrößen befüllt werden. Die Befüllung kann entweder auf Basis einer einfachen Zuweisung des Materialstroms zu einem Silo im Sinne eines Schalters oder auch auf Basis einer Klassierung nach Korngrößen oder Dichten durch Sichten oder Sieben erfolgen. Dadurch kann die Tatsache, dass Zementklinker eine nach Korngröße unterschiedliche Konzentration der Klinkerphasen aufweist, berücksichtigt werden.

Die chemisch/mineralogischen Probenanalysesysteme sind vor den Silos und hinter dem nachgeschalteten Verfahrensabschnitt angeordnet und erlauben auf Basis der in periodischen Abständen vor der Befüllung ermittelten Messwerte die Entscheidung über den/die Silo(s), in dem das beprobte Material gelagert wird und auf Basis der erzielten Qualitätskenngrößen nach dem nachgeschalteten Verfahrensabschnitt die Entscheidung über die aus den einzelnen Silos abzuziehenden Materialmengen. Die Ergebnisse der Analyse in Verbindung mit Einfüllzeit, Einfüllmenge und Einfüllort werden für die weitere Regelung zwischengespeichert.

Nach dem Stand der Technik wird für die Klinkerphasenbestimmung üblicherweise das Verfahren der Röntgendiffraktometrie mit der quantitativen Auswertung nach Rietveld und für die Bestimmung der Rohmaterialmoduln ein Röntgenfluoreszenzverfahren eingesetzt. Andere alternative oder ergänzende Verfahren sind aber auch möglich.

Die einzelnen Silos bzw. Silozellen sind dabei geometrisch vorteilhaft derart ausgeführt, dass ein Massenfluss sichergestellt ist. Dadurch entstehen horizontale Schichten in den Silozellen mit bekannten Qualitätskennwerten. Durch die Trennung der Lagerung nach Qualitätskenngrößen und der kontrollierten Entleerung einer jeden einzelnen Zelle ist es möglich, die Qualitätskenngrößen im nachgelagerten Prozess gezielt zu regeln.

Der Klinkersilo kann auch einfach durch eine mit Mauern oder Wänden getrennte Halde gebildet werden.

Die Probenanalysesysteme bestehen i.A. aus den Komponenten Probennahme, Probenpräparation und Messung sowie einer Steuerung und einer Software für die Auswertung und Analyse der Messdaten. Außerdem kann die Probennahme auch zusätzliche Fraktioniereinrichtungen nach Dichte und/oder Korngröße umfassen.

Wird ein solches System sowohl für das Rohmehl zwischen Rohmaterialaufbereitung und Klinkerbrennen als auch für den Klinker zwischen Klinkerbrennen und Zementvermahlung eingesetzt, so kann mit den durch das Probenanalysesystem des Klinkers ermittelten Qualitätskennwerten, die Entleerung der einzelnen Rohmehlsilos geregelt werden. Hierdurch können nicht vorhersagbare Änderungen durch Sekundärbrennstoffe oder Sekundärrohstoffe - z.B. Braunkohlenflugaschen, Reifen, Hausmüll - auf die Klinkerphasen ausgeregelt werden.

Bei gemeinsamer Vermahlung wird häufig eine ungewünschte nach Korngrößen separierte chemische Zusammensetzung beobachtet. Durch die Erfindung ist es ebenfalls vorteilhaft möglich, einzelne Rohmehlkomponenten durch getrenntes Mahlen und Lagern zu produzieren. Die Zusammenführung getrennt vermahlener Rohmehlkomponenten ermöglicht eine bessere Kontrolle der chemischen Zusammensetzung unabhängig von der Mahlbarkeit. Auch können Korrekturkomponenten, die sich durch eine hohe Konzentration eines Hauptoxids oder eines Nebenbestandteils auszeichnen, erzeugt und für spätere Korrekturen getrennt gelagert und bei Bedarf mit kurzen Totzeiten der Mischung zugefügt werden.

Weiterhin können die Probleme, die bei Ausfall der Dosierung einer Rohmaterialkomponente existieren, vermieden werden. In diesem Fall kann der benötigte Wertebereich der Qualitätskenngrößen häufig nicht mehr eingehalten werden und es bestehen keine ausreichenden Korrekturmöglichkeiten im weiteren Materialfluss. Durch die getrennte Lagerung einzelner Komponenten besteht in diesem Fall ein zeitlicher Puffer, um die Fehler in der Rezeptur zu korrigieren. Dieses führt beim heutigen Stand der Technik speziell bei schwer zu handhabenden Materialien, wie z.B. stark klebendem Ton oder rückgeführten Filterstäuben, zu Verfügbarkeitsproblemen der Anlage, da die Anlage anzuhalten und die Störung zu beseitigen ist.

Weitere Ausgestaltungen und Vorteile der Erfindung werden im Folgenden anhand der Beschreibung und der Zeichnung näher erläutert.

In der Zeichnung zeigen
- Fig. 1: eine schematische Übersicht einer Anlage zur Herstellung eines hydraulischen Bindemittels und
- Fig. 2: eine schematische Ansicht einer Rohmehlsiloanlage/Klinkersiloanlage.

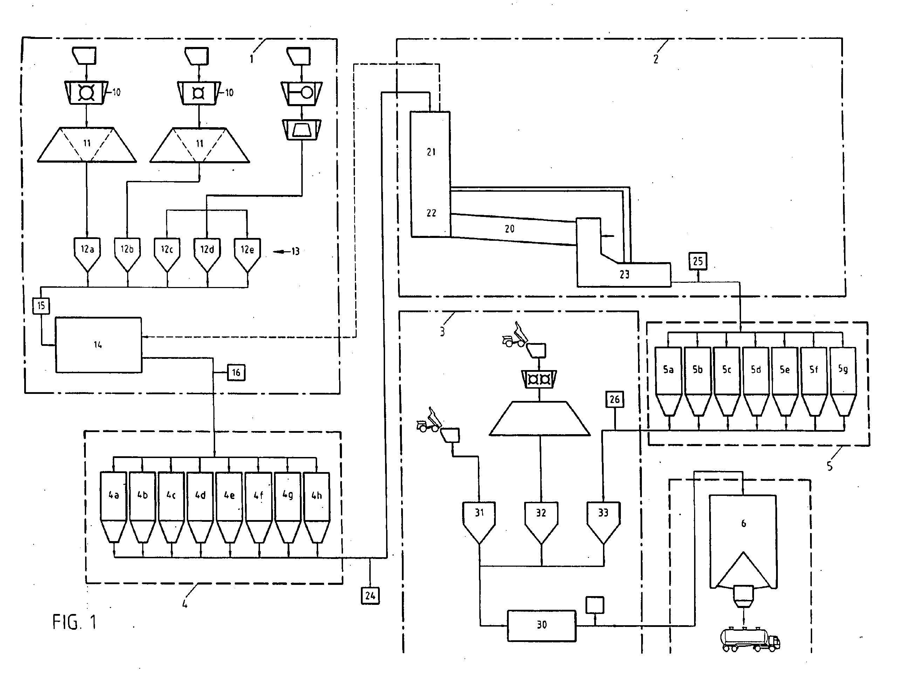

Die in Fig. 1 dargestellte Übersicht zeigt ein Anlage zur Herstellung eines hydraulischen Bindemittels, insbesondere Zement und Zementklinker.

Sie besteht aus den Verfahrensabschnitten Rohmaterialaufbereitung 1, Klinkerbrennen 2 und Zementmahlung 3. Zwischen den Verfahrensabschnitten ist ferner eine Rohmehlsiloanlage 4 bzw. eine Klinkersiloanlage 5 vorgesehen. Der fertiggemahlene Zement gelangt in einen Zementsilo 6 und kann dort für den Weitertransport abgefüllt werden.

Die für die Zementherstellung erforderlichen Rohmaterialkomponenten 12a-12e, wie Kalk, Ton, Eisenerz, etc., werden zumindest teilweise in Brechern 10 vorzerkleinert und gelangen dann über Lagerstätten in separate Vorratsbunker 13. Über nicht näher dargestellte Dosierorgane werden die Rohmaterialkomponenten einzeln oder gemeinsam abgezogen und in einer Mahleinrichtung 14 zu Rohmehl vermahlen.

Vor der Mahleinrichtung 14 kann eine Analyseeinrichtung 15 zur Analyse der Rohmaterialkomponenten in ihrer mineralogischen und/oder chemischen Zusammensetzung vorgesehen sein. Alternativ kann nach der Mahleinrichtung 14 eine weitere Analyseeinrichtung 16 vorgesehen sein, mit deren Hilfe die mineralogische und/oder chemische Zusammensetzung des Rohmehls/der Rohmehlkomponenten bestimmt werden kann.

Das Rohmehl gelangt anschließend zur Rohmehlsiloanlage 4, die aus einer Vielzahl von Rohmehlsilos 4a-4h besteht. Die einzelnen Rohmehlsilos können separat ausgebildet sein oder werden als einzelne Silozellen in Mehrzellensilos zusammengefasst. Die Vielzahl von Rohmehlsilos bittet die Möglichkeit, dass man diese mit Rohmehl unterschiedlicher mineralogischer und/oder chemischer Zusammensetzung befüllt. Dabei kann man einzelne Rohmaterialkomponenten 12a-12e zumindest teilweise getrennt vermahlen und in separaten Rohmehlsilos lagern. In der Praxis wird man zweckmäßigerweise manche Rohmaterialkomponenten gemeinsam und andere Rohmaterialkomponenten getrennt vermahlen und in den Rohmehlsilos lagern. Es besteht natürlich auch die Möglichkeit, verschiedene Komponenten mit unterschiedlichen Mengenverhältnissen mit einander zu vermahlen und zu lagern. Über das Analysegerät 16 ist man jederzeit über die Zusammensetzung des Materials im Bilde und kann die geeigneten Rohmehlsilos gezielt ansteuern.

Im nächsten Verfahrensabschnitt wird das Rohmehl zu Klinker gebrannt. Der Verfahrensabschnitt "Klinkerbrennen" umfasst üblicherweise einen Vorwärmer 21, einen Calcinator 22, einen Drehrohrofen 20 sowie einen Klinkerkühler 23. Das Rohmehl wird durch gezielten Abzug aus einem oder mehreren Rohmehlsilos 4a-4h in der gewünschten Zusammensetzung abgezogen und unmittelbar zur Brennanlage 2 transportiert. Das aus den Rohmehlsilos abgezogene Rohmehl wird somit nicht erst noch in einem Sammelsilo zwischengelagert. In der Brennanlage wird es im Vorwärmer im Gegenstrom zu den Abgasen des Drehrohrofens vorgewärmt, im Calcinator vorcalciniert und schließlich im Drehrohrofen zu Klinker gebrannt. Die Abkühlung erfolgt dann im nachgeschalteten Klinkerkühler 23.

In einer Analyseeinrichtung 24 wird die mineralogische und/oder chemische Zusammensetzung des aus den Rohmehlsilos abgezogenen Rohmehls bestimmt. In einer weiteren in oder nach dem Klinkerkühler 23 angeordneten Probennahme- und Analyseeinrichtung 25 wird schließlich die mineralogische und/oder chemische Zusammensetzung des Klinkers ermittelt. Die Proben können dabei in Fraktionen nach Dichte und Korngröße getrennt werden.

Der gebrannte Klinker wird der Klinkersiloanlage 5 zugeführt, die gleichfalls aus einer Vielzahl von Klinkersilos 5a-5g besteht. Auch hier ist es wiederum möglich, dass die Befüllung der einzelnen Klinkersilos und der Abzug des Klinkers aus ein oder mehreren Klinkersilos in Abhängigkeit der gewünschten mineralogischen und/oder chemischen Zusammensetzung des zu schaffenden Zement geregelt wird. Eine Analyseeinrichtung 26 ermittelt die mineralogische und/oder chemische Zusammensetzung des aus den Klinkersilos abgezogenen Klinkers.

Der fertige Zement besteht neben dem Klinker weiterhin aus Gips und weiteren Zusatzstoffen, die in der Zementmahlanlage 3 in einer Mühle 30 gemeinsam vermahlen werden. Um einen gleichmäßigen Materialfluss zur Mühle 30 zu gewährleisten, sind Vorbunker 31 (Zusatzstoffe), 32 (Gips) und 33 (Klinker) vorgesehen. Die einzelnen Komponenten werden über nicht näher dargestellte Dosierorgane entsprechend der gewünschten Zusammensetzung abgezogen und direkt der Zementmahlanlage 3 zugeführt. Der gemahlene Zement gelangt schließlich in den Zementsilo 6 und kann von dort in geeignete Transportmittel abgefüllt werden.

Statt eines einzelnen Klinkervorbunkers 33 können die verschiedenen Klinkerqualitäten auch in mehreren Klinkervorbunkern gelagert und von dort zusammen mit den anderen Komponenten zur Mühle transportiert werden. Die Analyseeinrichtung 26 kann dann auch erst zwischen den Vorbunkern und der Mühle 30 angeordnet werden.

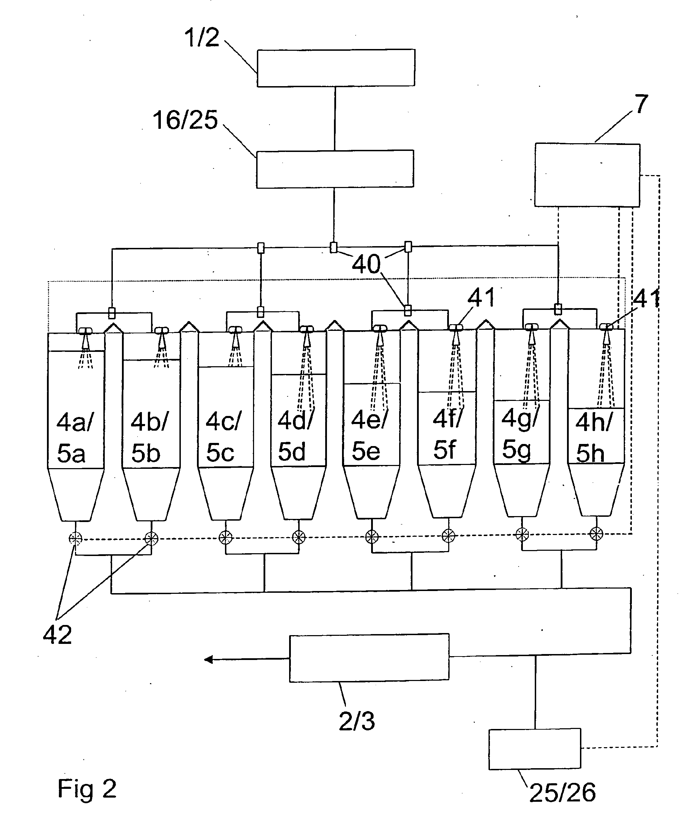

Im Folgenden wird die Rohmehlsiloanlage 4 anhand von Figur 2 näher beschrieben. Die folgende Beschreibung trifft jedoch auch auf die Klinkersiloanlage 5 zu. Um unnötige Wiederholungen zu vermeiden, wird daher nachfolgend im Wesentlichen auf die Rohmehlsiloanlage 4 Bezug genommen. Die mit der Klinkersiloanlage 5 in Verbindung stehenden Bezugszeichen sind hinter dem Schrägstrich zusätzlich angegeben.

Der vorgelagerte Prozess, hier die Rohmaterialaufbereitung, ist mit dem Bezugszeichen 1/2 gekennzeichnet. Der nachgelagerte Prozess, hier das Klinkerbrennen, ist mit dem Bezugszeichen 2/3 gekennzeichnet. Das bei der Rohmaterialaufbereitung 1 gemahlene Rohmehl bzw. Rohmehlkomponenten werden von der Analyseeinrichtung 16/25 in ihrer mineralogischen und/oder chemischen Zusammensetzung analysiert. Das Ergebnis der Analyse wird einer Steuerung 7 mitgeteilt, die Materialweichen 40 ansteuert, um die Befüllung eines bestimmten oder mehrer Rohmehlsilos/Klinkersilos festzulegen. Die Steuerung 7 überwacht ferner über Sensoren 41 den Füllstand jedes einzelnen Rohmaterialsilos/Klinkersilos.

Jedes der Rohmaterialsilos weist ein zugehöriges Auslassdosierorgan 42 auf welches gezielt über die Steuerung 7 angesteuert werden kann. Auf diese Weise können ein oder mehrere Auslassdosierorgane 42 gezielt angesteuert werden, um einen Rohmehlstrom mit einer gewünschten mineralogischen und/oder chemischen Zusammensetzung dem nachfolgenden Klinkerbrennprozess zu zuführen. Die Rohmehlzusammensetzung wird von der Analyseeinrichtung 25/26 ermittelt und gegebenenfalls zur Korrektur bzw. Nachregelung der Auslassdosierorgane 42 verwendet.

Die Vielzahl von Rohmehlsilos bzw. Klinkersilos erhöht die Flexibilität bei der Materialzusammensetzung. Man kann daher auch sehr kurzfristig, beispielsweise bei Einsatz von anderen Brennstoffen, beim Klinkerbrennen eine entsprechende Korrektur der Rohmehlzusammensetzung bewirken. Es besteht auch die Möglichkeit, durch die Analyse des gebrannten Klinkers schnellstmögliche Änderung in der Rohmehlzusammensetzung vorzunehmen. Weiterhin kann man Schwankungen in der Klinkerzusammensetzung durch gezielte Mischung von Klinker aus zwei oder mehreren Klinkersilos ausgleichen.

Bei der gemeinsamen Vermahlung wird häufig eine ungewünschte nach Korngrößen separierte chemische Zusammensetzung beobachtet. Mit der obigen Anlage ist es jedoch möglich, einzelne Rohmaterialkomponenten durch getrenntes Mahlen und Lagern zu produzieren. Die Zusammenführung getrennt vermahlender Rohmaterialkomponenten gewährleistet eine bessere Kontrolle der chemischen Zusammensetzung unabhängig von der Mahlbarkeit. Auch können Korrekturkomponenten, die sich durch eine hohe Konzentration eines Hauptoxids oder eines Nebenbestandteils auszeichnen, leicht erzeugt und für spätere Korrekturen getrennt gelagert und bei Bedarf mit kurzen Totzeiten der Mischung zugefügt werden.

Es ist bekannt, dass der Zementklinker eine nach Korngröße unterschiedliche Konzentration der Klinkerphasen aufweist. Es kann daher vorgesehen werden, dass die Analyseeinrichtungen zur Bestimmung der mineralogischen und/oder chemischen Zusammensetzung des Rohmehls/Klinkers Proben nehmen, die nach Korngröße und/oder Dichte fraktioniert sind. Es ist auch denkbar, dass man die Befüllung der Rohmehlsilos/Klinkersilos nach Korngröße und/oder Dichte durch Fraktionierung mittels Sieben oder Sichten bewirkt. So können insbesondere einzelne Weichen 40 mit geeigneten Mitteln zum Sieben oder Sichten ausgestattet sein.

## Patentansprüche

1. Verfahren zur Herstellung eines hydraulischen Bindemittels aus mehreren Rohmaterialkomponenten (12a-12e), wobei die Rohmaterialkomponenten zu Rohmehl vermahlen werden, das Rohmehl in einer Brennanlage (2) zu Klinker gebrannt wird und schließlich der Klinker zusammen mit weiteren Zumahlstoffen vermahlen wird,
**dadurch gekennzeichnet, dass**
der Klinker in seiner mineralogischen und/oder chemischen Zusammensetzung analysiert wird,
für den Klinker jeweils wenigstens zwei separate Klinkersilos (5a-5g) vorgesehen sind, die mit Klinker unterschiedlicher mineralogischer und/oder chemischer Zusammensetzung befüllt werden
und die Zusammensetzung des zu vermahlenden Klinkers durch gesteuerten Abzug in Abhängigkeit der analysierten Zusammensetzung des Klinkers aus ein oder mehreren Klinkersilos festgelegt wird.

2. Verfahren nach Anspruch 1, **dadurch gekennzeichnet, dass** die mineralogische und/oder chemische Zusammensetzung des Klinkers bestimmt wird und zur Steuerung des Abzugs des Rohmehls aus den Rohmehlsilos (4a-4h) verwendet wird.

3. Verfahren nach Anspruch 1, **dadurch gekennzeichnet, dass** die Befüllung der Klinkersilos und der Abzug des Klinkers aus ein oder mehreren Klinkersilos (5a-5g) in Abhängigkeit der gewünschten mineralogischen und/oder chemischen Zusammensetzung des zuschaffenden Zements geregelt wird.

4. Verfahren nach ein oder mehreren der vorhergehenden Ansprüche, **dadurch gekennzeichnet, dass** zur Bestimmung der mineralogischen und/oder chemischen Zusammensetzung des Klinkers nach Korngröße und/oder Dichte fraktionierte Proben genommen und analysiert werden.

5. Verfahren nach ein oder mehreren der vorhergehenden Ansprüche, **dadurch gekennzeichnet, dass** die Befüllung der Klinkersilos (5a-5g) nach Korngröße und/oder Dichte durch Fraktionierung mittels Sieben oder Sichten erfolgt.

6. Verfahren nach ein oder mehreren der vorhergehenden Ansprüche, **dadurch gekennzeichnet, dass** der zu vermahlende Klinker nach dem gesteuerten Abzug aus ein oder mehreren Klinkersilos unmittelbar der Zementmahlanlage zugeführt wird.

7. Anlage zur Herstellung eines hydraulischen Bindemittels aus mehreren Rohmaterialkomponenten mit einer Mahleinrichtung (14) zum Vermahlen der Rohmaterialkomponenten zu Rohmehl, mit einer Brennanlage (2) zum Brennen des Rohmehls zu Klinker und einer Zementmahlanlage (3) zum Mahlen des Klinkers,
**gekennzeichnet durch**
wenigstens eine Analyseeinrichtung (25, 26) zur Analyse des Klinkers in seiner mineralogischen und/oder chemischen Zusammensetzung,
eine Klinkersiloanlage (5), wobei für den Klinker jeweils wenigstens zwei separate Klinkersilos vorgesehen sind,
und eine Steuereinrichtung zum Befüllen der Klinkersilos (5a-5g) in Abhängigkeit der mineralogischen und/oder chemischen Zusammensetzung des Klinkers und zur Festlegung der Zusammensetzung des zu vermahlenden Klinkers **durch** gesteuerten Abzug in Abhängigkeit der analysierten Zusammensetzung des Klinkers aus ein oder mehreren Klinkersilos (5a-5g).

## Claims

1. Method for the production of a hydraulic binding agent from a plurality of raw material components (12a to 12e), wherein the raw material components are ground to a raw meal, the raw meal is burned to clinker in a combustion plant (2) and finally the clinker is ground together with further inter-grinding materials,
**characterised in that**
the mineralogical and/or chemical composition of the clinker is analysed,
at least two separate clinker silos (5a to 5g) are provided for the clinker and are filled with clinker of different mineralogical and/or chemical composition,
and the composition of the clinker to be ground is fixed by controlled extraction as a function of the analysed composition of the clinker from one or a plurality of clinker silos.

2. Method as claimed in Claim 1, **characterised in that** the mineralogical and/or chemical composition of the clinker is determined and used for control of the extraction of the raw meal from the raw meal silos (4a-4h).

3. Method as claimed in Claim 1, **characterised in that** the filling of the clinker silos and the extraction of the clinker from one or a plurality of clinker silos (5a to 5g) are regulated as a function of the desired mineralogical and/or chemical composition of the cement to be created.

4. Method as claimed in one or more of the preceding claims, **characterised in that** for determination of the mineralogical and/or chemical composition of the clinker samples which are fractionated according to grain size and/or density can be taken and analysed.

5. Method as claimed in one or more of the preceding claims, **characterised in that** the filling of the clinker silos (5a to 5g) is carried out by fractionation by means of screening or sifting according to grain size and/or density.

6. Method as claimed in one or more of the preceding claims, **characterised in that** the clinker to be ground is delivered directly to the cement grinding installation after the controlled extraction from one or a plurality of clinker silos.

7. Apparatus for the production of a hydraulic binding agent from a plurality of raw material components with a grinding apparatus (14) for grinding of the raw material components to raw meal, with a combustion plant (2) for burning of the raw meal to clinker and a cement grinding installation (3) for grinding of the clinker,
**characterised by**
at least one analysing means (25, 26) for analysis of the mineralogical and/or chemical composition of the clinker,
a clinker silo installation (5), wherein at least two separate clinker silos are provided for the clinker,
and a control device for filling of the clinker silos (5a to 5g) as a function of the mineralogical and/or chemical composition of the clinker and for fixing the composition of the clinker to be ground by controlled extraction as a function of the analysed composition of the clinker from one or a plurality of clinker silos (5a to 5g).

## Revendications

1. Procédé pour la fabrication d'un liant hydraulique à base de plusieurs composants en matériaux bruts (12a à 12e), les composants en matériaux bruts étant moulus en farine crue, la farine crue étant cuite en clinker, et le clinker étant finalement moulus avec d'autres substances de mouture, **caractérisé en ce que**
le clinker est analysé quant à sa composition minéralogique et / ou chimique,
il est prévu pour le clinker au moins deux silos de clinker séparés (5a à 5g), qui sont remplis avec du clinker de différente composition minéralogique et / ou chimique, et la composition du clinker à moudre est fixée par prélèvement contrôlé en fonction de la composition analysée du clinker en provenance d'un ou de plusieurs silos de clinker.

2. Procédé selon la revendication 1, **caractérisé en ce que** la composition minéralogique et / ou chimique du clinker est déterminée et est utilisée pour la commande du prélèvement de la farine crue hors des silos de farine crue (4a à 4h).

3. Procédé selon la revendication 1, **caractérisé en ce que** le remplissage des silos de clinker et le prélèvement du clinker hors d'un ou de plusieurs silos de clinker (5a à 5g) sont réglés en fonction de la composition minéralogique et / ou chimique désirée pour le ciment à réaliser.

4. Procédé selon l'une ou plusieurs des revendications précédentes, **caractérisé en ce que**, pour la détermination de la composition minéralogique et / ou chimique du clinker selon la granulométrie et / ou la densité, des échantillons fractionnés sont prélevés et analysés.

5. Procédé selon l'une ou plusieurs des revendications précédentes, **caractérisé en ce que** le remplissage des silos de clinker (5a à 5g) selon la granulométrie et / ou la densité est effectué par fractionnement au moyen de tamis ou par triage.

6. Procédé selon l'une ou plusieurs des revendications précédentes, **caractérisée en ce que** le clinker à moudre est amené directement à l'installation de broyage du ciment après le prélèvement contrôlé hors d'un ou de plusieurs silos de clinker.

7. Installation pour la fabrication d'un liant hydraulique à base de plusieurs composants en matériaux bruts, avec un dispositif de mouture (14) pour moudre les composants en matériaux bruts en farine crue, avec un four à calciner (2) pour la cuisson de la farine crue en clinker, et une installation de broyage de ciment (3) pour moudre le clinker, **caractérisée en ce que** sont prévus
au moins un système d'analyse (25, 26) pour l'analyse du clinker quant à sa composition minéralogique et / ou chimique,
une installation de silos de clinker (5), deux silos de clinker séparés étant respectivement prévus pour le clinker,
et un dispositif de commande pour le remplissage des silos de clinker (5a à 5g) en fonction de la composition minéralogique et / ou chimique du clinker, et pour la fixation de la composition du clinker à moudre, par prélèvement en fonction de la composition analysée du clinker en provenance d'un ou de plusieurs silos (5a à 5g).
